# EUROPÄISCHE PATENTSCHRIFT

(11) **EP 1 606 988 B1**
(45) Veröffentlichungstag und Bekanntmachung des Hinweises auf die Patenterteilung: **15.08.2007**
(21) Anmeldenummer: 05010941.2
(22) Anmeldetag: 20.05.2005
(51) Int. Cl.: A01D 41/14

(54) **Bodenkopiervorrichtung**
Ground-surface adaptation device
Dispositif d'adaptation à la surface du sol

(30) Priorität: 14.06.2004 DE 102004028396
(43) Veröffentlichungstag der Anmeldung: 21.12.2005
(73) Patentinhaber: CLAAS Selbstfahrende Erntemaschinen GmbH, 33428 Harsewinkel (DE)
(72) Erfinder: Eis, Günter, 33428 Harsewinkel (DE); Strieker, Norbert, 33334 Gütersloh (DE)

(56) Entgegenhaltungen:
- EP-A- 0 234 585
- DE-A1- 4 126 515
- DE-U1- 29 507 623
- US-A- 4 332 126

## Beschreibung

Die Erfindungen betrifft eine Bodenkopiervorrichtung nach dem Oberbegriff des Anspruchs 1.

Aus der DE 295 07 623 ist eine Entlastungsvorrichtung für eine hydraulische Hebeeinrichtung eines Nutzfahrzeuges zum Anheben eines Arbeitsgerätes aus einer abgesenkten Arbeitsstellung in eine angehobene Transportstellung mit einem durch eine Hydraulikpumpe durch Druck beaufschlagbaren hydraulischen Hebezylinder bekannt, dessen hydraulische Hebeleitung in Arbeitsstellung zur Verringerung der Auflagekraft des Arbeitsgerätes auf dem Untergrund durch die Entlastungsvorrichtung mit einem Restdruck beaufschlagbar ist. Durch leichte Schwankungen des Anbaugerätes beispielsweise aufgrund von Bodenunebenheiten auf denen das Anbaugerät entlanggleitet, bewegt sich die Kolbenstange des Hebezylinders abwechselnd in entgegengesetzte Richtungen, so dass geringe Mengen Drucköles beim Heben des Anbaugerätes aus dem Hebezylinder über den Ausgangsleitungsquerschnitt in die beiden Druckspeicher gedrückt wird bzw. beim Senken des Anbaugerätes aus den Druckspeichern zurück in den Hebezylinder gelangen. Bei längerer Betriebsdauer gelangt über den Kolben des Hebezylinders Lecköl in die vordere Kammer des Hebezylinders, so dass der Druck abnimmt. Bei Erreichen eines vorbestimmten Mindestdruckes, wird die Hydraulikpumpe aktiviert und der Druck in den Druckspeichern wieder angehoben.

Aus der DE 33 37 789 A1 ist eine hydraulische Schwebeanordnung für ein vertikal verstellbares Schneidwerk einer landwirtschaftlichen Maschine bekannt geworden, die einen Gas-Öl-Sammler aufweist, der mit dem Druckraum eines Hydraulikzylinders verbunden ist. Das Kopfstück wird von dem Hydraulikzylinder getragen, das heißt gehoben und abgesenkt. Die Schwebeanordnung soll ein Anheben des Kopfstücks in dem Fall beschleunigen und erleichtern, wenn das Kopfstück während des Erntens den Erdboden berührt, damit das Vorsatzgerät nicht mit vollem Gewicht auf dem Boden aufsetzt sondern entsprechend entlastet wird.

Nachteilig bei den genannten Vorrichtungen ist, dass die Regelung des Auflagedrucks des Vorsatzgerätes nur sehr ungenau erfolgt, da beim Heben und Senken des Vorsatzgerätes sehr hohe Reibungskräfte an den aus- und einfahrenden Hebezylindern wirken, die bei der Regelung unberücksichtigt bleiben.

Der Erfindung liegt daher die Aufgabe zugrunde, die Hubvorrichtung der eingangs bezeichneten Art derart weiterzuentwickeln, dass eine präzisere Regelung des Auflagedrucks möglich ist.

Diese Aufgabe wird erfindungsgemäß durch die kennzeichnenden Merkmale des Anspruchs 1 gelöst. Weitere vorteilhafte Wirkungen des Erfindungsgegenstandes ergeben sich aus den Unteransprüchen.

Indem durch eine im Vergleich zur Kolbenstangenabdichtung weniger abdichtende Kolbenabdichtung ein Leckölstrom fließen kann und gleichzeitig eine im Vergleich zur Kolbenabdichtung dichtere Kolbenstangenabdichtung den Kolbenstangendruckraum öldicht abschließt, kann ein Differentialzylinder eingesetzt werden, bei dem die durch die Bewegung der Kolbenstange im Zylindergehäuse auftretenden Reibungskräfte minimiert werden.

Vorteilhafterweise fließt der Leckölstrom beim Ein- und Ausfahren der Kolbenstange vom Kolbendruckraum in den Kolbenstangendruckraum, so dass die Kolbenabdichtung nicht öldicht ausgeführt sein muss und dadurch kostengünstig herzustellen ist.

Dadurch, dass die Kolbenstangenabdichtung bei niedrigem Druck öldicht ist, kann die Kolbenstangenabdichtung qualitativ anspruchsloser und damit kostengünstiger hergestellt werden.

In einer vorteilhaften Weiterbildung der Erfindung ist die Kolbenstangenabdichtung durch geglättete und /oder geschmierte Berührungsflächen an der Kolbenstange und/oder am Zylindergehäuse hergestellt, so dass keine weiteren zusätzlichen Dichtungen vorgesehen werden müssen.

Vorteilhafterweise wird die Kolbenabdichtung durch einen umlaufenden Spalt gebildet, der durch die Wahl einer weiten Passung zwischen Kolbenstange und Zylindergehäuse kostengünstig herstellbar ist.

Dadurch, dass der Differentialzylinder einfach wirkend betrieben wird, kann die Bodenkopierfunktion durch eine relativ einfache Schaltung realisiert werden.

Wenn ausschließlich der Kolbendruckraum über eine Hauptdruckleitung druckbeaufschlagt wird, kann die Kolbenstangenabdichtung für geringe Drücke ausgelegt, das heißt qualitativ weniger hochwertig ausgeführt werden.

Indem der Kolbenstangendruckraum des Differentialzylinders über eine Rücklaufleitung permanent mit einem Tank verbunden ist, saugt der Arbeitszylinder beim Einfahren der Kolbenstange Öl in den Kolbenstangendruckraum, damit dieser im Innern nicht korrodiert und ein Ölfilm an der Innenwandung des Zylindergehäuses gleichzeitig die Reibung zwischen Kolbenstange und Zylinder reduziert.

Um die fließenden Ölströme zu verringern, ist die Rücklaufleitung über ein Wegeventil mit der Hauptdruckleitung verbunden.

Dadurch, dass parallel zum Differentialzylinder wenigstens ein Druckspeicher geschaltet ist, ist das Vorsatzgerät federnd am Maschinenrahmen aufgehängt und die an dem Vorsatzgerät beim Gleiten auf dem Boden angreifenden Kräfte werden verringert, damit Beschädigungen am Schneidwerk und am Maschinenrahmen vermieden werden.

Weitere vorteilhafte Ausführungen sind Gegenstand weiterer Unteransprüche und werden an Hand eines in mehreren Figuren dargestellten Ausführungsbeispiels beschrieben.

Es zeigen:
- Fig.1: den vorderen Teil eines schematisch dargestellten Mähdreschers mit einer Bodenkopiervorrichtung;
- Fig.2: die Hydraulikschaltung des Hydraulikaggregates,
- Fig.3: den Mähdrescher 1 bei Bewegung des Schneidwerks 4 über eine Bodenunebenheit,
- Fig.4: das Diagramm mit linear ansteigender Stützlast und hystereseförmiger Stützlast,
- Fig.5: den Arbeitszylinder der erfindungsgemäßen Bodenkopiervorrichtung.

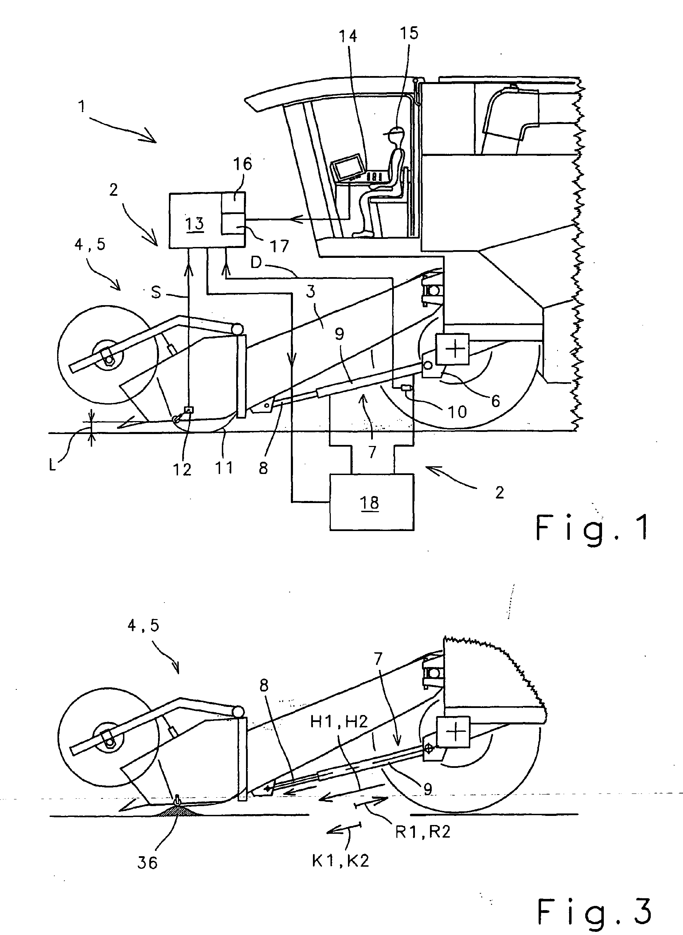

In der Fig. 1 ist schematisch der vordere Teil eines Mähdreschers 1 mit der erfindungsgemäßen Bodenkopiervorrichtung 2 in der Seitenansicht dargestellt. An dem vertikal schwenkbaren Einzugsschacht 3 des Mähdreschers 1 ist ein als Schneidwerk 4 ausgeführter Erntevorsatz 5 angeordnet. Zwischen dem Einzugsschacht 3 und dem Maschinenrahmen 6 sind zwei Arbeitszylinder 7 angeschlagen, wobei die Kolbenstangen 8 der Arbeitszylinder 7 gelenkig mit dem Einzugsschacht 3 und die Zylindergehäuse 9 der Arbeitszylinder 7 gelenkig mit dem Maschinenrahmen 6 des Mähdreschers 1 verbunden sind. Mit dem schwenkbaren Einzugsschacht 3 ist das Schneidwerk 4 mit den Arbeitszylindern 7 auf eine Schnitthöhe L einstellbar. Zusätzlich ist das Schneidwerk 4 auf an sich bekannte Weise unter Einsatz weiterer, nicht dargestellter Hubzylinder gegenüber dem Einzugschacht 3 verstellbar am Einzugsschacht 3 angeschlossen. Das vom Schneidwerk 4 aufgenommene Erntegut gelangt über den Einzugschacht 3 zu einem nicht dargestellten Dreschwerk im Mähdrescher 1, welches das Erntegut bearbeitet.

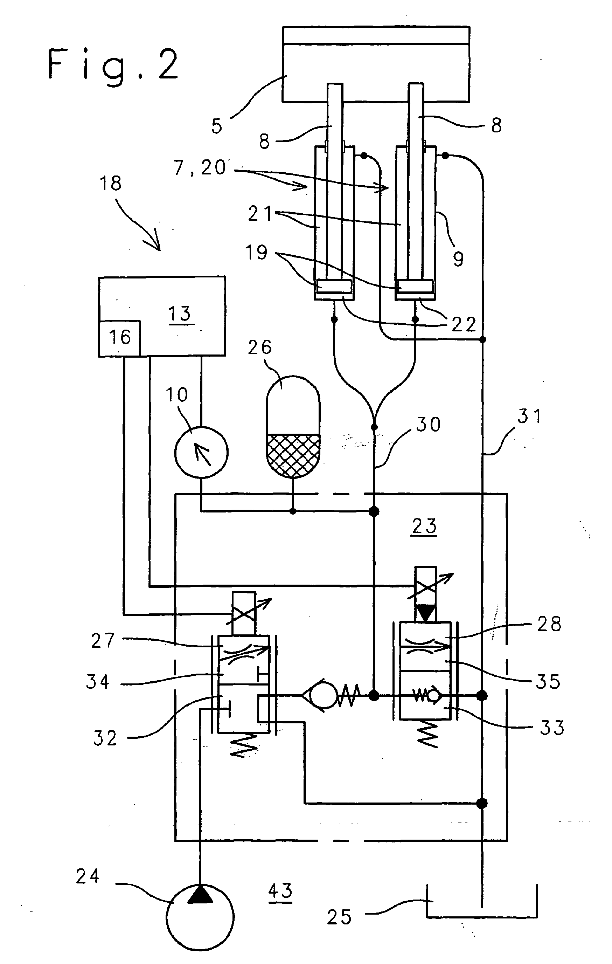

An den beiden Arbeitszylindern 7 ist ein Drucksensor 10 angeordnet, der den Druck P in den Arbeitszylindern 7 detektiert. Unterhalb des Schneidwerks 4 sind zwei Tastbügel 11 angebracht, die mit Hilfe von Drehwinkelsensoren 12 die Schnitthöhe L detektieren. Die Drucksensoren 10 und die Drehwinkelsensoren 12 sind mit einer Steuereinheit 13 verbunden, an die ein von dem Drucksensor 10 generiertes Drucksignal D und die von den Drehwinkelsensoren 12 erzeugten Schnitthöhensignale S übermittelf werden. Weiterhin ist die Steuereinheit 13 mit einer Bedieneinheit 14 verbunden, über die ein Bediener 15 einen Soll-Auflagedruck 16 und eine Soll-Schnitthöhe 17 vorgibt, die in der Steuereinheit 13 gespeichert werden. Die Steuereinheit 13 regelt in Abhängigkeit von den Drucksignalen D oder den Schnitthöhensignalen S ein mit den Arbeitszylindern 7 verbundenes Hydraulikaggregat 18 der Bodenkopiervorrichtung 2, mit dem die Arbeitszylinder 7 auf an späterer Stelle noch näher beschriebene Weise druckbeaufschlagt oder entlastet werden. Die Regelung des Hydraulikaggregates erfolgt in Abhängigkeit von dem Schnitthöhensignale S solange das Schneidwerk 4 über dem Boden schwebt und die Tastbügel 11 ein Schnitthöhensignal S sensieren. Sobald das Schneidwerk 4 auf dem Boden aufsetzt oder wenn das Schneidwerk 4 auf dem Boden gleitet, wird das Hydraulikaggregat 18 in Abhängigkeit von den Drucksignalen D geregelt. In der Fig.2 ist die Hydraulikschaltung des Hydraulikaggregates 18 der Bodenkopiervorrichtung 2 zusammen mit den Arbeitszylindern 7 schematisch dargestellt, mit denen der Erntevorsatz 5 höhenverstellbar gehalten wird. Beide Arbeitszylinder 7 sind als einfach wirkende Differentialzylinder 20 ausgeführt, wobei ein mit der Kolbenstange 8 fest verbundener Kolben 19 das Zylindergehäuse 9 in einen Kolbendruckraum 22 und einen Kolbenstangendruckraum 21 trennt.

Die Arbeitszylinder 7 sind mit einem Ventilblock 23 verbunden an dem eine Hydraulikpumpe 24, ein Tank 25, und ein Druckspeicher 26 angeschlossen sind. Der Ventilblock 23 selbst nimmt zwei schaltbare Wegeventile 27, 28 und ein Rückschlagventil 29 auf.

Die Hydraulikpumpe 24 wird über eine Hauptdruckleitung 30 mit den Kolbendruckräumen 22 der Arbeitszylinder 7 verbunden, wenn das Wegeventil 27 in eine Hebestellung 34 geschaltet ist. Hinter dem Wegeventil 27 ist in Strömungsrichtung der Hydraulikpumpe 24 das Rückschlagventil 29 in der Hauptdruckleitung 30 angeordnet, so dass es einen Fluidstrom von den Arbeitszylindern 7 zurück in Richtung Tank 25 sperrt, wenn das Wegeventil 27 in eine Sperrstellung 32 geschaltet ist.

Die Kolbenstangendruckräume 21 der Arbeitszylinder 7 sind über Rücklaufleitungen 31 permanent mit dem Tank 25 verbunden. Zwischen der Hauptdruckleitung 30 und den Rücklaufleitungen 31 ist das Wegeventil 28 geschaltet, welches je nach Schaltstellung einen Fluidstrom von der Hauptdruckleitung 30 zur Rücklaufleitung 31 sperrt oder freigibt. Der Druckspeicher 26 ist parallel zu den Arbeitszylindern 7 an die Hauptdruckleitung 30 angeschlossen.

Zum Anheben des Erntevorsatzes 5 wird das Wegeventil 27 in eine Hebestellung 34 geschaltet. Die Hydraulikpumpe 24 beaufschlagt die Kolbendruckräume 22 und den Druckspeicher 26 mit Fluid, wodurch sich ein Druck P aufbaut, der mit dem Drucksensor 10 gemessen wird. Bei Erreichen eines Grenzdruckes fährt die Kolbenstange 8 des Arbeitszylinders 7 aus und hebt den Erntevorsatz 5 an. Dabei wird ein eventuell in dem Kolbenstangenraum 21 des Arbeitszylinders 7 befindliches Fluid über die Rücklaufleitung 31 in den Tank 25 verdrängt.

Um den Erntevorsatz 5 abzusenken wird das zweite Wegeventil 28 in eine Senkstellung 35 umgeschaltet. In der Senkstellung 35 des Wegeventils 28 sind die Hauptdruckleitung 30 und die Rücklaufleitungen 31 kurzgeschlossen. Das Fluid fließt von der Hauptdruckleitung 30 kommend über das Wegeventil 28 und die Rücklaufleitungen 31 zurück in den Tank 25.

Wenn die beiden Wegeventile 27, 28 wie in Fig. 2 dargestellt in Sperrstellung 32, 33 geschaltet sind, bilden die Kolbendruckräume 22, der Druckspeicher 26 und die Hauptdruckleitung 30 einen nahezu geschlosseries System.

Sinkt der Druck P in den Kolbendruckräumen 22 der Arbeitszylinder 7, weil die Kolbenstangen 8 beispielsweise als Folge des über eine Bodenunebenheit 36 gleitenden Erntevorsatzes 5 ausfahren und sich dadurch die Kolbendruckräume 22 vergrößern, fließen als Druckausgleich vom Druckspeicher 26 Fluidströme in die Kolbendruckräume 22, wodurch der Erntevorsatz 5 entlastet wird. Umgekehrt fließen die Fluidströme von den Kolbendruckräumen 22 wieder zurück in den Druckspeicher 26, wenn die Kolbenstangen 8 einfahren und der Erntevorsatz 5 wieder abgesenkt wird.

Die Schaltventile 27, 28 und der Druckensor 10 sind mit der Steuereinheit 13 verbunden.

Die Steuereinheit 13 steuert in Abhängigkeit vom Druck P die Schaltventile 27, 28. Sinkt der Druck P unter den in der Steuereinheit 13 gespeicherten Soll-Auflagedruck 16, wird das Schaltventil 27 in die Hebestellung 34 geschaltet, so dass die Hydraulikpumpe 24 die Kolbendruckräume 22 und den Druckspeicher 26 solange mit Fluid beaufschlagt, bis der Druck P dem Soll-Auflagedruck 16 entspricht.

Übersteigt der Druck P den in der Steuereinheit 13 gespeicherten Soll-Auflagedruck 16, wird das Schaltventil 28 in die Senkstellung 35 geschaltet, so dass das Fluid aus den Kolbendruckräumen 22 und dem Druckspeicher 26 in den Tank 25 abfließen kann, bis der Druck P dem Soll-Auflagedruck 16 entspricht.

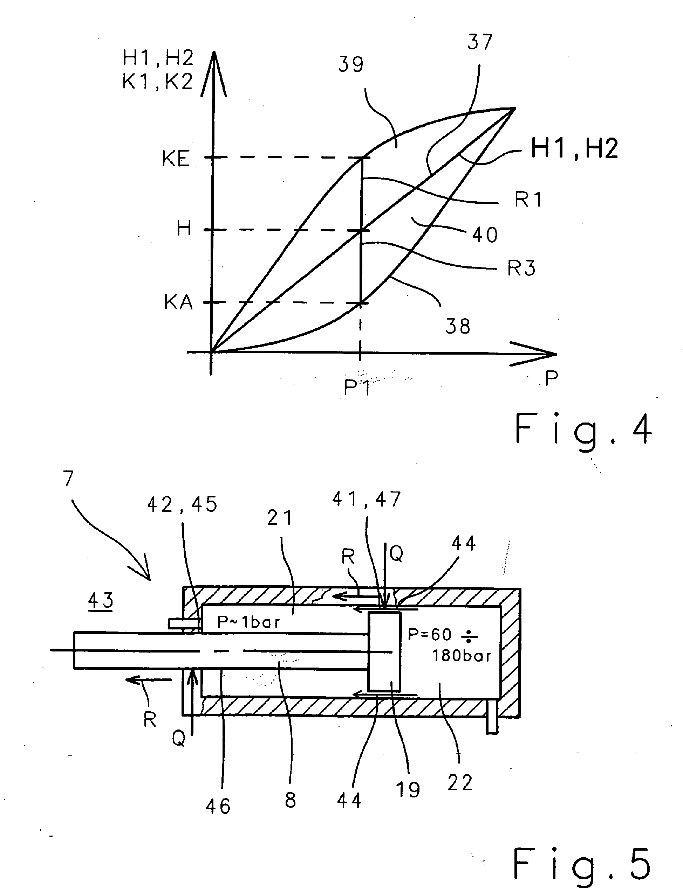

Fig.3 zeigt den Mähdrescher 1 beim Bewegen des Schneidwerks 4 über eine Bodenunebenheit 36. Das Schneidwerk 4 wird von den Arbeitszylindern 7 mit Haltekräften H1, H2 gehalten, die proportional zum Druck P in den Arbeitszylindern 7 sind. Überquert das Schneidwerk 3 eine Bodenunebenheit 36, so bewirkt das Ein-und Ausfahren der Kolbenstangen 8 aus dem Zylindergehäuse 9 Reibungskräfte R1, R2, R3, R4 die der Bewegung der Kolbenstangen 8 entgegengesetzt sind. Die resultierenden Kräfte K1, K2 mit denen das Schneidwerk 4 bei der Bewegung der Kolbenstangen 8 angehoben bzw. abgesenkt wird, setzen sich somit aus den proportional vom Druck P abhängigen Haltekräften H1, H2 und den jeweils von der Bewegungsrichtung und Geschwindigkeit der Kolbenstangen 8 abhängigen Reibungskräften R1, R2, R3, R4 zusammen.

In der Fig. 4 ist in einem Diagramm die proportionale Abhängigkeit zwischen der Haltekraft H1 und dem Druck P in einer linear ansteigenden Kurve 37 dargestellt. Gleichzeitig ist in dem Diagram die Abhängigkeit der resultierenden Kraft K1 vom Druck P in einer hystereseförmigen Kurve 38 abgebildet, wobei beide Kurven 37, 38 den gleichen Startpunkt und den gleichen Endpunkt aufweisen. Ein oberhalb der linear ansteigende Kurve 37 liegender Bereich 39 der hystereseförmigen Kurve 38 gilt für die bei sinkendem Druck P einfahrende Kolbenstange 8 und ein unterhalb der linear ansteigenden Kurve 37 liegender Bereich 40 der hystereseförmigen Kurve 38 gilt für die bei steigendem Druck P ausfahrende Kolbenstange 8.

Bei einem Druck P1 ergeben sich bei der hystereseförmigen Kurve 38 zwei verschieden große resultierende Kräfte KE, KA beim Ein- und Ausfahren der Kolbenstange 8 während die linear ansteigenden Kurve 37 dem Druck P1 genau eine Haltekraft H zuordnet. Die resultierende Kraft KE ist um die Reibungskraft R1 größer als die Haltekraft H und die resultierende Kraft KA um die Reibungskraft R3 kleiner als die Haltekraft H.

Die hysteresförmige Kurve 38 lässt eine eindeutige Zuordnung des Druckes P zu einer resultierenden Kraft K1 nicht zu und ist deswegen ungeeignet, um die Haltekraft H1 präzise zu regeln.

Um eine eindeutige Zuordnung zu ermöglichen, muss die Reibung der Arbeitszylinder reduziert oder eliminiert werden, so dass sich die hystereseförmige Kurve 38 an die linear ansteigenden Kurve 37 angleicht oder zumindest annähert.

Fig. 5 zeigt den Arbeitszylinder 7 der erfindungsgemäßen Bodenkopiervorrichtung. Der Kolbendruckraum 22 wird mit einer Kolbenabdichtung 41 gegenüber dem Kolbenstangendruckraum 21 sowie der Kolbenstangendruckraum 21 mit einer Kolbenstangenababdichtung 42 gegenüber der Umgebung 43 abgedichtet. Der Kolbendruckraum 22 wird mit einem Druck von etwa 60-180 bar beaufschlagt.

Durch die im Vergleich zur Kolbenstangenabdichtung 42 weniger abdichtende Kolbenabdichtung 41 kann ein Leckölstrom 44 zwischen Kolben 19 und Zylindergehäuse 9 vom Kolbendruckraum 22 in den Kolbenstangendruckraum 21 fließen, wenn die Kolbenstange 8 ein- oder ausfährt, bei stillstehender Kolbenstange 8 ist die Kolbenabdichtung 41 dagegen öldicht. Der Kolbenstangendruckraum 21 dient lediglich zur Aufnahme des Leckölstroms 44 und weist nahezu Atmosphärendruck auf. Die weniger abdichtende Kolbenabdichtung 41 hat den Vorteil, dass sie bei der Bewegung der Kolbenstange 8 weniger Reibung als eine üblicherweise eingesetzte, auch bei der Bewegung der Kolbenstange 8 öldichte Kolbenabdichtung 41 verursacht.

Die im Vergleich zur Kolbenabdichtung 41 intensiver abdichtende Kolbenstangenabdichtung 42 schließt den Kolbenstangendruckraum 21 bei Atmosphärendruck öldicht ab. Die intensiver abdichtende Kolbenstangenabdichtung 42 hat den Vorteil, dass sie ebenfalls weniger Reibung als eine üblicherweise eingesetzte, auch bei Druckbeaufschlagung öldichte Kolbenstangenabdichtung verursacht.

Die Kolbenabdichtung 41 wird durch einen umlaufenden Spalt 47 zwischen Kolben 19 und dem Zylindergehäuse 9 gebildet. Diese ist durch die Wahl einer weiten Spielpassung zwischen Kolben 19 und Zylindergehäuse 9 kostengünstig zu fertigen.

Die Kolbenstangenabdichtung 42 wird im Ausführungsbeispiel durch geglättete und/oder geschmierte Berührungsflächen 45, 46 an der Kolbenstange 8 und/oder am Zylindergehäuse 9 gebildet, die bei der Bewegung der Kolbenstangen 8 aufeinander gleiten, dadurch sind keine zusätzlichen Dichtungsbauteile erforderlich. Denkbar wäre aber auch, die Kolbenabdichtungen 41 sowie die Kolbenstangenabdichtung 42 durch an sich bekannte Dichtelemente wie beispielsweise Dichtringe auszubilden.

Der Differentialzylinder 20 bietet den Vorteil, dass die durch die Belastung des Differentialzylinders 20 auftretenden Querkräfte Q sowohl von der Kolbenabdichtung 41 als auch von der Kolbenstangenabdichtung 42 aufgenommen werden. Dadurch sind die Querkräfte Q geringer, so dass die davon proportional abhängigen Reibungskräfte R ebenfalls geringer sind.

Es liegt im Rahmen des Könnens des Fachmanns, die hier am Beispiel eines Mähdreschers 1 beschriebene Vorrichtung an beliebigen Arbeitsmaschinen mit adaptierten Arbeitsorganen einzusetzen, um die beschriebenen Effekte zu erzielen, ohne dabei den Rahmen der Erfindung zu verlassen.

### Bezugszeichenliste:

- 1: Mähdrescher
- 2: Bodenkopiervorrichtung
- 3: Einzugschacht
- 4: Schneidwerk
- 5: Erntevorsatz
- 6: Maschinenrahmen
- 7: Arbeitszylinder
- 8: Kolbenstange
- 9: Zylindergehäuse
- 10: Drucksensor
- 11: Tastbügel
- 12: Drehwinkelsensor
- 13: Steuereinheit
- 14: Bedieneinheit
- 15: Bediener
- 16: Soll-Auflagedruck
- 17: Soll-Schnitthöhe
- 18: Hydraulikaggregat
- 19: Kolben
- 20: Differentialzylinder
- 21: Kolbenstangendruckraum
- 22: Kolbendruckraum
- 23: Ventilblock
- 24: Hydraulikpumpe
- 25: Tank
- 26: Druckspeicher
- 27: Wegeventil
- 28: Wegeventil
- 29: Rückschlagventil
- 30: Hauptdruckleitung
- 31: Rücklaufleitung
- 32: Sperrstellung
- 33: Sperrstellung
- 34: Hebestellung
- 35: Senkstellung
- 36: Bodenunebenheit
- 37: Linear ansteigende Kurve
- 38: Hystereseförmige Kurve
- 39: Bereich
- 40: Bereich
- 41: Kolbenabdichtung
- 42: Kolbenstangenabdichtung
- 43: Umgebung
- 44: Leckölstrom
- 45: Berührungsfläche
- 46: Berührungsfläche
- 47: Spalt

- D: Drucksignal
- L: Schnitthöhe
- P: Druck
- S: Schnitthöhensignal
- H, H 1, H2: Haltekraft
- K1, K2; KE, KA: resultierende Kraft
- R1, R2, R3, R4: Reibungskraft

## Patentansprüche

1. Bodenkopiervorrichtung (2) zum Bodenkopieren von an einer selbstfahrenden Erntemaschine montierbaren Emtevorsätzen (5) mit wenigstens einem Arbeitszylinder (7) zum bodenkopierenden Heben und Senken des Erntevorsatzes (5), wobei der Arbeitszylinder (7) ein Differentialzylinder (20) ist, der von einem Kolben (19) mit einer Kolbenstange (8) und von einem Zylindergehäuse (9) gebildet wird und der Kolben (19) das Zylindergehäuse (9) in einen Kolbendruckraum (22) und einen Kolbenstangendruckraum (21) teilt,
mit einer Kolbenabdichtung (41), die den Kolbendruckraum (22) gegenüber dem Kolbenstangendruckraum (21) abdichtet,
mit einer Kolbenstangenabdichtung (42), die den Kolbenstangendruckraum (21) gegenüber der Umgebung (43) abdichtet,
**dadurch gekennzeichnet,**
**dass** durch eine im Vergleich zur Kolbenstangenabdichtung (42) weniger abdichtende Kolbenabdichtung (41) ein Leckölstrom (44) fließen kann und gleichzeitig eine im Vergleich zur Kolbenabdichtung (41) dichtere Kolbenstangenabdichtung (42) den Kolbenstangendruckraum (21) öldicht abschließt.

2. Bodenkopiervorrichtung nach Anspruch 1,
**dadurch gekennzeichnet,**
**dass** der Leckölstrom (44) beim Ein- und Ausfahren der Kolbenstange (22) vom Kolbendruckraum (22) in den Kolbenstangendruckraum (21) fließt.

3. Bodenkopiervorrichtüng nach Anspruch 1,
**dadurch gekennzeichnet,**
**dass** die Kolbenstangenabdichtung (42) bei niedrigem Druck öldicht ist.

4. Bodenkopiervorrichtung nach wenigstens einem der vorhergehenden Ansprüche,
**dadurch gekennzeichnet,**
**dass** die Kolbenstangenabdichtung (42) durch geglättete und /oder geschmierte Berührungsflächen (45, 46) an der Kolbenstange (8) und/oder am Zylindergehäuse (9) gebildet wird.

5. Bodenkopiervorrichtung nach wenigstens einem der vorhergehenden Ansprüche,
**dadurch gekennzeichnet,**
**dass** die Kolbenabdichtung (41) durch einen umlaufenden Spalt (47) gebildet wird.

6. Bodenkopiervorrichtung nach wenigstens einem der vorhergehenden Ansprüche,
**dadurch gekennzeichnet,**
**dass** der Differentialzylinder (20) einfach wirkend betrieben wird.

7. Bodenkopiervorrichtung nach wenigstens einem der vorhergehenden Ansprüche,
**dadurch gekennzeichnet,**
**dass** der Kolbendrubkraum (22) über eine Hauptdruckleitung (30) druckbeaufschlagt wird.

8. Bodenkopiervorrichtung nach wenigstens einem der vorhergehenden Ansprüche,
**dadurch gekennzeichnet,**
**dass** der Kolbenstangendruckraum (21) des Differentialzylinders (20) über eine Rücklaufleitung.(31) permanent mit einem Tank (25) verbunden ist.

9. Bodenkopiervorrichtung nach wenigstens einem der vorhergehenden Ansprüche;
**dadurch gekennzeichnet,**
**dass** die Rücklaufleitung (31) über ein Wegeventil (27) mit der Hauptdruckleitung (30) verbunden ist.

10. Bodenkopiervorrichtung nach wenigstens einem der vorhergehenden Ansprüche;
**dadurch gekennzeichnet,**
**dass** parallel zum Differentialzylinder (20) wenigstens ein Druckspeicher (26) geschaltet ist.

## Claims

1. A ground copying apparatus (2) for ground copying of harvesting implements (5) which can be mounted on a self-propelled harvester, comprising at least one working cylinder (7) for ground-copying raising and lowering movement of the harvesting implement (5), wherein the working cylinder (7) is a differential cylinder (20) formed by a piston (19) with a piston rod (8) and a cylinder housing (9) and the piston (19) divides the cylinder housing (9) into a piston pressure chamber (22) and a piston rod pressure chamber (21),
comprising a piston seal (41) which seals off the piston pressure chamber (22) with respect to the piston rod pressure chamber (21), and
a piston rod seal (42) which seals off the piston rod pressure chamber (21) in relation to the ambient atmosphere (43),
**characterised in that**
a leakage oil flow (44) can flow through a piston seal (41) which is less sealing in comparison with the piston rod seal (42) and at the same time a piston rod seal (42) which is tighter in comparison with the piston seal (41) oil-tightly closes off the piston rod pressure chamber (21).

2. A ground-copying apparatus according to claim 1 **characterised in that** the leakage oil flow (44) flows from the piston pressure chamber (22) into the piston rod pressure chamber (21) in the inward and outward movement of the piston rod (22).

3. A ground-copying apparatus according to claim 1 **characterised in that** the piston rod seal (42) is oil-tight at low pressure.

4. A ground-copying apparatus according to at least one of the preceding claims **characterised in that** the piston rod seal (42) is formed by smoothed and/or lubricated contact surfaces (45, 46) on the piston rod (8) and/or on the cylinder housing (9).

5. A ground-copying apparatus according to at least one of the preceding claims **characterised in that** the piston seal (41) is formed by a peripherally extending gap (47).

6. A ground-copying apparatus according to at least one of the preceding claims **characterised in that** the differential cylinder (20) is operated in a single-acting mode.

7. A ground-copying apparatus according to at least one of the preceding claims **characterised in that** the piston pressure chamber (22) is subjected to pressure by way of a main pressure line (30).

8. A ground-copying apparatus according to at least one of the preceding claims **characterised in that** the piston rod pressure chamber (21) of the differential cylinder (20) is permanently connected to a tank (25) by way of a return line (31).

9. A ground-copying apparatus according to at least one of the preceding claims **characterised in that** the return line (31) is connected to the main pressure line (30) by way of a directional control valve (27).

10. A ground-copying apparatus according to at least one of the preceding claims **characterised in that** at least one pressure storage means (26) is connected in parallel with the differential cylinder (20).

## Revendications

1. Dispositif d'adaptation à la surface du sol (2) pour adapter à la surface du sol des outils frontaux (5) montés sur une machine de récolte automotrice, comportant
au moins un vérin de travail (7) pour lever et abaisser l'outil frontal (5) en fonction de la surface du sol, le vérin de travail (7) étant un vérin différentiel (20) qui comprend un piston (19) avec une tige de piston (8) et un corps de vérin (9) et dans lequel le piston (19) divise le corps de vérin (9) en une chambre de pression de piston (22) et une chambre de pression de tige de piston (21),
une étanchéité de piston (41) qui assure l'étanchéité de la chambre de pression de piston (22) vis-à-vis de la chambre de pression de tige de piston (21),
une étanchéité de tige de piston (42) qui assure l'étanchéité de la chambre de pression de tige de piston (21) vis-à-vis de l'environnement (43),
**caractérisé par le fait que**
grâce à une étanchéité de piston (41) moins efficace que l'étanchéité de tige de piston (42), un écoulement de fuite (44) est créé, tandis que simultanément une étanchéité de tige de piston (42) plus efficace par rapport à l'étanchéité de piston (41) ferme de façon étanche la chambre de pression côté tige de piston (21).

2. Dispositif d'adaptation à la surface du sol selon la revendication 1, **caractérisé par le fait que** l'écoulement de fuite (44) lors de la rentrée et de la sortie de la tige de piston (8) a lieu de la chambre de pression de piston (22) dans la chambre de pression de tige de piston (21).

3. Dispositif d'adaptation à la surface du sol selon la revendication 1, **caractérisé par le fait que** l'étanchéité de tige de piston (42) est étanche lorsque la pression est faible.

4. Dispositif d'adaptation à la surface du sol selon au moins une des revendications précédentes, **caractérisé par le fait que** l'étanchéité de tige de piston (42) est formée par des surfaces de contact (45, 46) polies et/ou lubrifiées sur la tige de piston (8) et/ou dans le corps de vérin (9).

5. Dispositif d'adaptation à la surface du sol selon au moins une des revendications précédentes, **caractérisé par le fait que** l'étanchéité de piston (41) est formée par un interstice (47) périphérique

6. Dispositif d'adaptation à la surface du sol selon au moins une des revendications précédentes, **caractérisé par le fait que** le vérin différentiel (20) fonctionne en vérin à simple effet.

7. Dispositif d'adaptation à la surface du sol selon au moins une des revendications précédentes, **caractérisé par le fait que** la chambre de pression de piston (22) est alimentée en pression par l'intermédiaire d'une conduite de pression principale (30).

8. Dispositif d'adaptation à la surface du sol selon au moins une des revendications précédentes, **caractérisé par le fait que** la chambre de pression de tige de piston (21) du vérin différentiel (20) est reliée de manière permanente à un réservoir (25) par l'intermédiaire d'une conduite de retour (31).

9. Dispositif d'adaptation à la surface du sol selon au moins une des revendications précédentes, **caractérisé par le fait que** la conduite de retour (31) communique avec la conduite de pression principale (30) par l'intermédiaire d'un distributeur (30).

10. Dispositif d'adaptation à la surface du sol selon au moins une des revendications précédentes, **caractérisé par le fait qu'**au moins un accumulateur de pression (26) est branché en parallèle avec le vérin différentiel (20).
